(19) Europäisches Patentamt / European Patent Office / Office européen des brevets

(11) **EP 4 538 316 A1**

(12) **EUROPEAN PATENT APPLICATION**
published in accordance with Art. 153(4) EPC

(43) Date of publication:
**16.04.2025 Bulletin 2025/16**

(21) Application number: **23823822.4**

(22) Date of filing: **08.06.2023**

(51) International Patent Classification (IPC):
*C08J 5/04* (2006.01)     *C08J 5/24* (2006.01)
*F16F 15/02* (2006.01)

(52) Cooperative Patent Classification (CPC):
**C08J 5/04; C08J 5/24; F16F 15/02**

(86) International application number:
**PCT/JP2023/021354**

(87) International publication number:
**WO 2023/243531 (21.12.2023 Gazette 2023/51)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **13.06.2022 JP 2022095040**

(71) Applicant: **I.S.T Corporation**
**Otsu-shi, Shiga 520-2153 (JP)**

(72) Inventors:
• **ONIWA Keiichiro**
  **Otsu-shi, Shiga 520-2153 (JP)**
• **UEHARA Satoshi**
  **Otsu-shi, Shiga 520-2153 (JP)**

(74) Representative: **TBK**
**Bavariaring 4-6**
**80336 München (DE)**

(54) **FIBER-REINFORCED MOLDED RESIN OBJECT**

(57) An objective of the present invention is to provide a vibration-damping fiber-reinforced molded resin object having high mechanical characteristics and high vibration-damping. The fiber-reinforced molded resin object includes a polyimide fiber and a resin. The polyimide fiber has a fiber diameter in the range of 10.0 $\mu$m or more and 18.0 $\mu$m or less. The polyimide fiber in the fiber-reinforced molded resin object has a volume content in the range of 40% or more and 70% or less. The fiber-reinforced molded resin object has, when measured in an environment at 23 °C, a damping loss factor of 0.005 or more at a natural frequency of 6400 Hz or less.

EP 4 538 316 A1

Description

## TECHNICAL FIELD

The present invention relates to a fiber-reinforced molded resin object having high mechanical characteristics and high vibration-damping.

## BACKGROUND ART

A fiber-reinforced composite resin material containing reinforced fibers in a resin is widely used for components of, for example, transportation machinery or household electrical appliances and for building materials. A component formed from a soft material typically has high vibration-damping. The resin may be a soft resin or a resin containing rubber to improve vibration-damping. However, such a resin may have greatly lower rigidity and strength.

Fiber-reinforced molded resin objects have been developed to have high rigidity and strength while maintaining vibration-damping. Fiber-reinforced molded resin objects are formed from a resin such as an epoxy resin reinforced with reinforced fibers such as glass fibers or carbon fibers. Such fiber-reinforced molded resin objects are light, highly rigid, and have high strength. Thus, such fiber-reinforced molded resin objects are widely used for components of, for example, transportation machinery or household electrical appliances, for building materials, as well as for sporting item and products in the automotive industry and the aircraft industry.

Tennis rackets and golf clubs nowadays are expected to have vibration-damping to improve tactile sensation and feel during striking. The structural components of rockets are to have, in addition to higher strength, higher vibration-damping to reduce the resonance breakdown of electronic devices during launching. For building materials for, for example, walls or roofs, vibration control is also notable for sound insulation, as well as vibration-damping for earthquake-resistant structures. Although the recent use of wind energy increases the use of fiber-reinforced molded resin objects in wind turbine blades, the wind turbine blades often generate noise due to vibrations. Such wind turbine blades are also to have vibration-damping.

Patent Literature 1 discloses a golf club shaft including a shaft formed from a fiber-reinforced resin. The shaft includes a vibration-damping layer formed by knitting metal fibers at least partially in the longitudinal direction of the shaft. Patent Literature 2 discloses a golf club shaft including one or more layers of polyester films between fiber-reinforced resin layers or on an inner surface of an innermost fiber-reinforced resin layer.

Patent Literature 3 discloses a tennis racket formed from a fiber-reinforced composite material as a matrix resin containing an epoxy resin composition including a specific epoxy resin, rubber particles insoluble in the epoxy resin, and polyvinyl formal. In this fiber-reinforced composite material, rubber particles insoluble in the epoxy resin enter the reinforced fiber bundle, and the reinforced fibers also filter the rubber particles to a certain degree. More rubber components are thus on the surface than inside the prepreg. More specifically, the laminated members can have more rubber components between the layers of the prepreg. The tennis racket has higher vibration-damping and improved strikes than a tennis racket formed from a fiber-reinforced composite material including rubber particles soluble in an epoxy resin and uniformly containing rubber components. However, the fiber-reinforced composite material may contain rubber particles with a lower elastic modulus than the epoxy resin in its reinforced fiber bundle. This lowers the elastic modulus of the matrix resin in the reinforced fiber bundle, thus reducing the rigidity and the strength of the tennis racket.

## PRIOR ART DOCUMENT

## PATENT DOCUMENT

Patent Document 1: Japanese Unexamined Patent Application Publication No. 2009-261473
Patent Document 2: Japanese Unexamined Patent Application Publication No. 2008-237373
Patent Document 3: Japanese Unexamined Patent Application Publication No. 2003-012889

## SUMMARY OF THE INVENTION

## PROBLEMS TO BE SOLVED BY THE INVENTION

In response to the above issue, the present invention is directed to a vibration-damping fiber-reinforced molded resin object with high mechanical characteristics and high vibration-damping.

**MEANS FOR SOLVING THE PROBLEMS**

A fiber-reinforced molded resin object according to a first aspect of the present invention includes a polyimide fiber and a resin. The polyimide fiber has a fiber diameter in the range of 10.0 $\mu$m or more and 18.0 $\mu$m or less. The polyimide fiber in the fiber-reinforced molded resin object has a volume content in the range of 40% or more and 70% or less. The fiber-reinforced molded resin object has, at a measurement temperature of 23 °C, a damping loss factor of 0.005 or more at a natural frequency of 6400 Hz or less.

In the fiber-reinforced molded resin object according to the first aspect, the polyimide fiber may have a tensile strength in the range of 2.5 GPa or more and 3.5 GPa or less.

In the fiber-reinforced molded resin object according to the first aspect, the polyimide fiber may have a tensile elastic modulus in the range of 100 GPa or more and 170 GPa or less.

A product according to a second aspect of the present invention includes the above fiber-reinforced molded resin object.

The product according to the second aspect may be at least one selected from the group consisting of a transportation device, an acoustic device, a video device, an industrial device, an air-conditioning device, automobile equipment, a construction material, a wind blade, an unattended device, a sporting item, and welfare equipment. The above sporting item may be at least one selected from the group consisting of a golf club, a ski, a snowboard, a tennis racket, a badminton racket, a squash racket, an ice hockey stick, and a sport bike. The above unattended device may be at least one selected from the group consisting of a robotic arm, a drone, and a radio-controlled device.

A prepreg according to a third aspect of the present invention is for manufacturing the above fiber-reinforced molded resin object. The prepreg includes a polyimide fiber and a resin or a resin precursor. The resin precursor herein refers to a monomer composition (possibly including a cross-linker or another agent) before curing or a polymer precursor.

**EFFECTS OF THE INVENTION**

The fiber-reinforced molded resin object according to the present invention contains a specific amount of polyimide fibers, and has higher vibration-damping characteristics and higher vibration-damping than known carbon fiber-reinforced molded resin objects or glass fiber-reinforced molded resin objects and also has sufficient mechanical characteristics. The fiber-reinforced molded resin object according to the present invention has high vibration-damping, and can improve vibration-damping without decreasing rigidity and strength and thus can be used for reducing vibrations in transportation devices, achieving high vibration-damping in acoustic devices, improving the strikes of golf balls, the shock absorption of tennis rackets, the sensitivity of fishing rods, the earthquake resistance of buildings, and reducing resonance breakdown in electronic machinery.

**DETAILED DESCRIPTION OF THE INVENTION**

<Structure of Fiber-reinforced Molded resin object in Embodiment of Present Invention>

A fiber-reinforced molded resin object according to an embodiment of the present invention mainly contains polyimide fibers and a resin.

The polyimide fibers described above may be obtained by polymerization of aromatic tetracarboxylic dianhydride and an aromatic diamine. The aromatic tetracarboxylic dianhydride may be at least one of pyromellitic dianhydride or 3,3', 4,4'-biphenyltetracarboxylic dianhydride. The aromatic diamine may be at least one of 4,4'-diaminodiphenyl ether or para-phenylenediamine.

The polyimide fibers described above may be long fibers or short fibers cut to have any length. The polyimide fibers described above have a fiber diameter in the range of 10.0 $\mu$m or more and 18.0 $\mu$m or less to maintain the high mechanical strength of the obtained fiber-reinforced molded resin object. The polyimide fibers have a tensile strength in the range of 2.5 GPa or more and 3.5 GPa or less to maintain high mechanical strength. The polyimide fibers may have a tensile strength in the range of 3.0 GPa or more and 3.5 GPa or less. The fiber-reinforced molded resin object has the tensile elastic modulus of polyimide fibers in the range of 100 GPa or more and 170 GPa or less to maintain high vibration-damping. The polyimide fibers may have a tensile elastic modulus in the range of 100 GPa or more and 150 GPa or less.

The polyimide fibers in the fiber-reinforced molded resin object according to the embodiment of the present invention have a volume content in the range of 40% or more and 70% or less to have high vibration-damping and maintain high mechanical strength. The polyimide fibers may have a volume content in the range of 40% or more and 65% or less, and specifically in the range of 45% or more and 65% or less.

The above resin may be a thermosetting resin. Examples of the thermosetting resin include an epoxy resin, an unsaturated polyester resin, a phenolic resin, a vinylester resin, a urethane resin, a diallyl phthalate resin, a bismaleimide triazine resin, a cyanate ester resin, a polyphenylene ether resin, a polyimide resin, and a silicone resin. The thermosetting resin may be a copolymer, a modified resin, or a resin mixed with two or more resins. The above resin may be a thermoplastic resin. Examples of the thermoplastic resin include a polyethylene resin, a polypropylene resin, a polybutylene resin, a polyethylene terephthalate resin, a polybutylene terephthalate resin, a polytrimethylene terephthalate resin, a polyethylene naphthalate resin, a polyarylate resin, a polystyrene resin, a polyvinyl alcohol resin, a polyphenylene oxide resin, a polyphenylene ether resin, a polyamide resin, a polyoxymethylene resin, a polycarbonate resin, a polyurethane resin, a polyvinyl chloride resin, a polyacrylate resin, a polyphenylene sulfide resin, a polysulfone resin, a polyethersulphone resin, a polyacrylic resin, a polyketone resin, a polyether-etherketone resin, a polyimide resin, a polyetherimide resin, an acrylonitrile-butadienestyrene resin, a polyamideimide resin, a fluorine-based resin, and the above elastomer resin. The thermoplastic resin may be a copolymer, a modified resin, or a resin mixed with two or more resins. Among the above resin materials, an epoxy resin and a polyimide resin may be used to achieve an intended adhesive balance. Without detracting from the spirit and scope of the present invention, functional agents such as flame retardants, light-resistant agents, ultraviolet absorbers, smoothing agents, antistatic agents, antioxidants, molding removers, plasticizers, colorants, antibacterial agents, pigments, conductive agents, silane coupling agents, and inorganic coatings may be added to the resin.

Examples of the above epoxy resin include a bisphenol A epoxy resin, a bisphenol F epoxy resin, a bisphenol S epoxy resin, a phenol novolac epoxy resin, a bisphenol A novolac epoxy resin, a cresol novolac epoxy resin, a diaminodiphenylmethane epoxy resin, and an epoxy resin formed by halogenation of some of the hydrogen atoms in the epoxy resin structure to be flame retardant. Examples of the curing agent for the epoxy resin include an amide curing agent such as dicyandiamide or aliphatic polyamide, an amine curing agent such as diaminodiphenylmethane or triethylenediamine, a phenol curing agent such as a phenol novolac resin or a bisphenol A novolac resin, an acid anhydride compound, a mercaptan compound, a phenol resin, and an amino resin.

The polyimide resin described above may be, for example, a polyimide resin containing an aromatic tetracarboxylic dianhydride and an aromatic diamine. Examples of the aromatic tetracarboxylic dianhydride include pyromellitic dianhydride, 1,2,5,6-naphthalenetetracarboxylic dianhydride, 1,4,5,8-naphthalenetetracarboxylic dianhydride, 2,3,6,7-naphthalenetetracarboxylic dianhydride, 2,2',3,3'-biphenyltetracarboxylic dianhydride, 2,3,3'4'-biphenyltetracarboxylic dianhydride, 3,3',4,4'-biphenyltetracarboxylic dianhydride (BPDA), 2,2',3,3'-benzophenonetetracarboxylic dianhydride, 2,3,3',4'-benzophenonetetracarboxylic dianhydride, 3,3',4,4'-benzophenonetetracarboxylic dianhydride (BTDA), bis(3,4-dicarboxyphenyl)sulfone dianhydride, bis(2,3-dicarboxyphenyl)methane dianhydride, bis(3,4-dicarboxyphenyl)methane dianhydride, 1,1-bis(2,3-dicarboxyphenyl)ethane dianhydride, 1,1-bis(3,4-dicarboxyphenyl)ethane dianhydride, 2,2-bis[3,4-(dicarboxyphenoxy)phenyl]propane dianhydride (BPADA), 4,4'-(hexafluoroisopropylidene) diphthalic anhydride, oxydiphthalic anhydride (ODPA), bis(3,4-dicarboxyphenyl)sulfone dianhydride, bis(3,4-dicarboxyphenyl)sulfoxide dianhydride, thiodiphthalic dianhydride, 3,4,9,10-perylenetetracarboxylic dianhydride, 2,3,6,7-anthracenetetracarboxylic dianhydride, 1,2,7,8-phenanthrenetetracarboxylic dianhydride, 9,9-bis(3,4-dicarboxyphenyl)fluorene dianhydride, and 9,9-bis[4-(3,4'-dicarboxyphenoxy)phenyl]fluorene dianhydride. Examples of the aromatic tetracarboxylic dianhydride also include cyclobutanetetracarboxylic dianhydride, 1,2,3,4-cyclopentanetetracarboxylic dianhydride, 2,3,4,5-tetrahydrofurantetracarboxylic dianhydride, 1,2,4,5-cyclohexanetetracarboxylic dianhydride, 3,4-dicarboxy-1-cyclohexylsuccinic dianhydride, and 3,4-dicarboxy-1,2,3,4-tetrahydro-1-naphthalenesuccinic dianhydride. Examples of the aromatic diamine include 4,4'-diaminodiphenyl ether, para-phenylenediamine (PPD), meta-phenylenediamine (MPDA), 2,5-diaminotoluene, 2,6-diaminotoluene, 4,4'-diaminobiphenyl, 3,3'-dimethyl-4,4'-diaminobiphenyl, 3,3'-dimethoxy-4,4'-diaminobiphenyl, 2,2-bis(trifluoromethyl)-4,4'-diaminobiphenyl, 3,3'-diaminodiphenylmethane, 4,4'-diaminodiphenylmethane (MDA), 2,2-bis-(4-aminophenyl)propane, 3,3'-diaminodiphenylsulfone (33DDS), 4,4'-diaminodiphenylsulfone (44DDS), 3,3'-diaminodiphenylsulfide, 4,4'-diaminodiphenylsulfide, 3,3'-diaminodiphenyl ether, 3,4'-diaminodiphenyl ether (34ODA), 1,5-diaminonaphthalene, 4,4'-diaminodiphenyldiethylsilane, 4,4'-diaminodiphenylsilane, 4,4'-diaminodiphenylethylphosphine oxide, 1,3-bis(3-aminophenoxy)benzene (133APB), 1,3-bis(4-aminophenoxy)benzene (134APB), 1,4-bis(4-aminophenoxy)benzene, bis[4-(3-aminophenoxy)phenyl]sulfone (BAPSM), bis[4-(4-aminophenoxy)phenyl]sulfone (BAPS), 2,2-bis[4-(4-aminophenoxy)phenyl]propane (BAPP), 2,2-bis(3-aminophenyl) 1,1,1,3,3,3-hexafluoropropane, 2,2-bis(4-aminophenyl)1,1,1,3,3,3-hexafluoropropane, and 9,9-bis(4-aminophenyl) fluorene.

The fiber-reinforced molded resin object according to the embodiment of the present invention may have, at a natural frequency of 6400 Hz or less at a measurement temperature of 23 °C, a damping loss factor of 0.005 or more, or specifically in the range of 0.005 or more and 0.050 or less, or more specifically in the range of 0.006 or more and 0.050 or less. At the measurement temperature of 23 °C, the fiber-reinforced molded resin object may have a natural frequency of 5200 Hz or less, 5150 Hz or less, 5100 Hz or less, 5050 Hz or less, 5000 Hz or less, or 4950 Hz or less.

The fiber-reinforced molded resin object according to the embodiment of the present invention may have, for example, the tensile strength in the fiber direction (longitudinal direction of the fibers) in the range of 0.5 GPa or more and 2.1 GPa or less when the fibers are all in the same direction. When used as a building material, the fiber-reinforced molded resin object has high strength and light weight in addition to earthquake resistance.

The fiber-reinforced molded resin object according to one or more embodiments of the present invention can be used for a product to have high vibration-damping and its component. Examples of the product include a transportation device, an acoustic device, a video device, an industrial device, an air-conditioning device, automobile equipment, a construction material, a wind generator, an unattended device, a sporting item, and welfare equipment. Examples of the component include a blade for a wind generator. Examples of the sporting item include a golf club, a ski, a snowboard, a tennis racket, a badminton racket, a squash racket, an ice hockey stick, and a sport bike. A fiber-reinforced molded resin object according to one or more embodiments of the present invention may be used for a golf shaft as a component of a golf club. A fiber-reinforced molded resin object according to one or more embodiments of the present invention may be used for a frame as a component of a sport bike. Examples of the unattended device include a robotic arm, a drone, and a radio-controlled device. A fiber-reinforced molded resin object according to one or more embodiments of the present invention may be used for a housing as a component of the unattended device. The welfare equipment includes, for example, a prosthetic limb, a cane, and a wheelchair. A fiber-reinforced molded resin object according to one or more embodiments of the present invention may be used for a frame as a component of the wheelchair.

<Method for Manufacturing Fiber-reinforced Molded resin object According to Embodiment of Present Invention>

The fiber-reinforced resin molding according to the embodiment of the present invention may be performed with a known method. Examples of such methods include, for example, a hand lay-up molding method, a resin injection molding method, a pressing method or an injection molding method using a bulk molding compound (BMC) or a sheet molding compound (SMC), a continuous pultrusion method, and an autoclave molding method. These methods may be selected based on the intended shape and the type of the matrix resin (e.g., a thermosetting resin or a thermoplastic resin). Of the above methods, an autoclave molding method may be preferably used.

For example, a fiber-reinforced molded resin object may be manufactured using a unidirectionally aligned prepreg sheet (hereafter referred to as "a UD prepreg"). The fiber-reinforced molded resin object may be manufactured with the method described below. A mixture is first obtained by mixing a thermosetting resin and a curing agent together. The mixture is applied to a first mold release paper, and the first mold release paper is pre-wound around a drum winder with the applied mixture coating facing upward. Polyimide fibers are then wound around the drum winder with an intended basis weight. A second mold release paper with the above mixture applied is then laminated onto the polyimide fibers with the applied mixture coating facing downward. The resultant structure is then heated and dried to an intermediate cured state to obtain a UD prepreg. The method for manufacturing the UD prepreg may be, for example, (a) a filament winding method, (b) a dipping method with which a fiber substrate is impregnated with resin and then heated and dried, or (c) a hot melt method with which aligned fibers are heated and pressed onto a sheet coated with a resin. Reinforced fibers other than the polyimide fibers may be mixed with the polyimide fibers to produce unidirectionally aligned prepreg sheets. The UD prepreg is finally laminated based on the design for the application, and the laminate is heated and pressed in a vacuum to manufacture a fiber-reinforced molded resin object.

<Working examples and Comparative Examples>

Although specific working examples and comparative examples are described below, the present invention is not limited to the working examples.

Working Example 1

1. Production of Polyimide Fibers

First, 136 g of para-phenylenediamine (PPD) and 2,224 g of N-methylpyrrolidone were placed into a reaction vessel, and the PPD was dissolved in N-methylpyrrolidone. Then, 259.0 g of 3,3',4,4'-biphenyltetracarboxylic dianhydride (BPDA) and 82.30 g of pyromellitic dianhydride (PMDA) were placed into the above reaction vessel to polymerize the PMDA and the PPD at room temperature. This formed a polyimide precursor solution with a concentration of 17.7 mass%. The polyimide precursor solution was then mixed with a solution of 21.41 g of 1,3-diazole dissolved in 40.41 g of N-methylpyrrolidone to prepare a polyimide precursor solution for spinning. The spinning polyimide precursor solution was then discharged using a spinning discharger into a coagulation bath mainly containing water to obtain polyimide precursor fibers. The polyimide precursor fibers were then washed, stretched, and heated to obtain polyimide fibers.

The fiber diameter and the tensile properties of the obtained polyimide fibers were measured in the manner described below.

(1) Fiber Diameter

The fineness of the polyimide fibers obtained as described above was measured using an automatic vibronic fineness measuring device DC-21 (Search Co., Ltd.). The fiber diameter of the polyimide fibers was determined to be 14 μm using the measured fineness and the specific gravity of the polyimide fibers.

(2) Tensile Properties

The tensile elastic modulus (cN/dtex) and the tensile strength (cN/dtex) of the polyimide fibers obtained as described above were measured with a method in accordance with JISR7607. The tensile elastic modulus (GPa) of the same polyimide fibers was then obtained based on the conversion formula of the elastic modulus (cN/dtex) × specific gravity/10. The tensile strength (GPa) of the same polyimide fibers was obtained based on the conversion formula of the strength (cN/dtex) × the specific gravity/10. The polyimide fibers had a tensile elastic modulus of 137 GPa and a tensile strength of 3.1 GPa.

2. Production of Fiber-reinforced Molded resin object

The polyimide fibers obtained as described above were aligned in a predetermined direction to have a fiber weight of 116 g/m$^2$. The aligned polyimide fibers were impregnated with an epoxy resin composition containing 100 parts by mass of an epoxy main agent (JER828, Mitsubishi Chemical Corporation) and 8 parts by mass of a curing agent (ADEKA Hardener EH-3636AS, ADEKA Corporation) mixed together. The resultant polyimide fibers were heated in a thermostatic oven at 120 °C for 30 minutes to produce a UD prepreg. Then, 15 sheets of the obtained UD prepreg were laminated to have the same fiber direction. The laminate was held between plate-like molds, vacuum-bagged, and heated and pressed at 130 °C for 90 minutes at 6 atmosphere to obtain a fiber-reinforced molded resin object. The autoclave was heated at a temperature increase rate of 2 °C/min. The obtained fiber-reinforced molded resin object had a thickness of 1.93 mm and a polyimide fiber volume content of 60%.
The volume content Vf of polyimide fibers was determined using Formula 1 below.

$$Vf = Faw \times N/\rho/T/10 \qquad (1)$$

In the formula, Faw is the basis weight of polyimide fibers (g/m$^2$), N is the number of UD prepreg laminates, ρ is the density of the polyimide fibers (g/cm$^3$), and T is the thickness of the fiber-reinforced molded resin object (mm). The polyimide fibers have a density of 1.5 g/cm$^3$.
The damping loss factor and the tensile properties of the obtained fiber-reinforced molded resin object were measured with the methods described below.

(1) Measurement of Damping Loss Factor

The damping loss factor of the fiber-reinforced molded resin object was measured through loss factor measurement (central exciting method) with a method in accordance with JISK7391. More specifically, a PULSE analyzer (LAN-XI as hardware and PulseLabShop, MS18143 as software, Bruel & Kjar) was used at the measurement temperature to 23 °C and the upper measurement frequency to 6400 Hz to measure the loss factor at the natural frequency (frequency) of the fiber-reinforced molded resin object.
The fiber-reinforced molded resin object had a damping loss factor of 0.00747 at a natural frequency (frequency) of 156 Hz, a damping loss factor of 0.00910 at a natural frequency (frequency) of 953 Hz, a damping loss factor of 0.00933 at a natural frequency (frequency) of 2598 Hz, and a damping loss factor of 0.00959 at a natural frequency (frequency) of 4930 Hz.

(2) Tensile Properties

The tensile test was performed on the obtained fiber-reinforced molded resin object with a precision universal testing machine (AG-50kNXplus, Shimadzu Corporation) with a method in accordance with ASTM-D3039. The fiber-reinforced molded resin object had a tensile strength of 1.55 GPa and a tensile elastic modulus of 44.8 GPa in the fiber direction (longitudinal direction of the fibers).

Working Example 2

The polyimide fibers obtained in Working Example 1 were aligned in a predetermined direction to have a fiber weight of 117 g/m$^2$. The aligned polyimide fibers were then impregnated with an epoxy resin composition containing 100 parts by mass of an epoxy main agent (JER828, Mitsubishi Chemical Corporation) and 25 parts by mass of a curing agent (JER Cure W, Mitsubishi Chemical Corporation) mixed together. The resultant polyimide fibers were heated in a thermostatic oven at 150 °C for 15 minutes to produce a UD prepreg. Then, 15 sheets of the obtained UD prepreg were laminated to have the same fiber direction. The laminate was held between plate-like molds, vacuum-bagged, and heated and pressed at 175 °C for four hours at 10 atmosphere using a small test press (Mini TESTPRESS-10, Toyo Seiki Seisaku-sho, Ltd.) to obtain a fiber-reinforced molded resin object. The obtained fiber-reinforced molded resin object had a thickness of 1.93 mm and a polyimide fiber volume content of 61%.

The damping loss factor of the fiber-reinforced molded resin object obtained as described above was measured with the same method as in Working Example 1. The fiber-reinforced molded resin object had a damping loss factor of 0.00665 at a natural frequency (frequency) of 162 Hz, a damping loss factor of 0.00825 at a natural frequency (frequency) of 1003 Hz, a damping loss factor of 0.01022 at a natural frequency (frequency) of 2736 Hz, and a damping loss factor of 0.01248 at a natural frequency (frequency) of 5141 Hz. The tensile properties of the fiber-reinforced molded resin object were also measured with the same method as described in Working Example 1. The fiber-reinforced molded resin object had a tensile elastic modulus of 1.58 GPa and a tensile strength of 45.5 GPa.

Comparative Example 1

The fiber-reinforced molded resin object was obtained in the same manner as in Working Example 2 except that the polyimide fibers were replaced by glass fibers (ECG 150-1/0, Nitto Boseki Co., Ltd.). The obtained fiber-reinforced molded resin object had a thickness of 1.94 mm and a glass fiber volume content of 61%. The damping loss factor and the tensile properties of the fiber-reinforced molded resin object were measured with the same method as described in Working Example 1. Consequently, the fiber-reinforced molded resin object had a damping loss factor of 0.00228 at a natural frequency (frequency) of 93 Hz, a damping loss factor of 0.00252 at a natural frequency (frequency) of 583 Hz, a damping loss factor of 0.00328 at a natural frequency (frequency) of 1623 Hz, and a damping loss factor of 0.00461 at a natural frequency (frequency) of 3158 Hz. The fiber-reinforced molded resin object had a tensile strength of 1.56 GPa and a tensile elastic modulus of 36.6 GPa.

Comparative Example 2

Twelve sheets of a carbon fiber prepreg (P3252S-17, Toray Industries, Inc.) as a unidirectional material were laminated. The laminate was heated and pressed to obtain a fiber-reinforced molded resin object in the same manner as described in Working Example 1. The obtained fiber-reinforced molded resin object had a thickness of 1.93 mm and a carbon fiber volume content of 60%. The damping loss factor and the tensile properties of the fiber-reinforced molded resin object were measured with the same method as described in Working Example 1. The fiber-reinforced molded resin object had a damping loss factor of 0.00108 at a natural frequency (frequency) of 174 Hz, a damping loss factor of 0.00082 at a natural frequency (frequency) of 1087 Hz, a damping loss factor of 0.00148 at a natural frequency (frequency) of 3005 Hz, and a damping loss factor of 0.00257 at a natural frequency (frequency) of 5778 Hz. The fiber-reinforced molded resin object had a tensile strength of 2.4 GPa and a tensile elastic modulus of 110.4 GPa.

The present invention is not limited to the above embodiments and working examples. The fiber-reinforced molded resin object according to the present invention has high vibration-damping and can be used for a product selected from the group consisting of a transportation device, an acoustic device, a video device, an industrial device, an air-conditioning device, automobile equipment, a construction material, a wind blade, an unattended device, a sporting item, and welfare equipment. The embodiments of the present invention may be modified as appropriate without departing from the spirit and scope of the invention.

**Claims**

1. A fiber-reinforced molded resin object, comprising:

   a polyimide fiber; and
   a resin,
   wherein the polyimide fiber has a fiber diameter in a range of 10.0 μm or more and 18.0 μm or less,
   the polyimide fiber has a volume content in a range of 40% or more and 70% or less, and

   the fiber-reinforced molded resin object has, at a measurement temperature of 23 °C, a damping loss factor of 0.005 or more at a natural frequency of 6400 Hz or less.

2. The fiber-reinforced molded resin object according to claim 1, wherein the polyimide fiber has a tensile strength in a range of 2.5 GPa or more and 3.5 GPa or less.

3. The fiber-reinforced molded resin object according to claim 1, wherein the polyimide fiber has a tensile elastic modulus in a range of 100 GPa or more and 170 GPa or less.

4. A product comprising the fiber-reinforced molded resin object according to any one of claims 1 to 3.

5. The product according to claim 4, wherein the product is at least one selected from the group consisting of a transportation device, an acoustic device, a video device, an industrial device, an air-conditioning device, automobile equipment, a construction material, a wind blade, an unattended device, a sporting item, and welfare equipment.

6. The product according to claim 5, wherein the sporting item is at least one selected from the group consisting of a golf club, a ski, a snowboard, a tennis racket, a badminton racket, a squash racket, an ice hockey stick, and a sport bike.

7. The product according to claim 5, wherein the unattended device is at least one selected from the group consisting of a robotic arm, a drone, and a radio-controlled device.

8. A prepreg for manufacturing the fiber-reinforced molded resin object according to any one of claims 1 to 3, the prepreg comprising:

   a polyimide fiber; and
   a resin or a resin precursor.

## INTERNATIONAL SEARCH REPORT

| International application No. |
| --- |
| **PCT/JP2023/021354** |

### A. CLASSIFICATION OF SUBJECT MATTER

*C08J 5/04*(2006.01)i; *C08J 5/24*(2006.01)i; *F16F 15/02*(2006.01)i
FI: C08J5/04; C08J5/24; F16F15/02 Q

According to International Patent Classification (IPC) or to both national classification and IPC

### B. FIELDS SEARCHED

Minimum documentation searched (classification system followed by classification symbols)

B29B11/16;15/08-15/14;C08J5/04-5/10;5/24; B29C70/00-70/88; F16F15/02

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | CN 109503960 A (JIANGSU XIANNUO NEW MATERIAL TECHNOLOGY CO., LTD.) 22 March 2019 (2019-03-22)<br>claims, paragraphs [0002]-[0004], examples | 1-8 |
| A | JP 2004-324007 A (UNITIKA LTD) 18 November 2004 (2004-11-18)<br>entire text | 1-8 |
| A | JP 2004-51853 A (POLYMATECH CO LTD) 19 February 2004 (2004-02-19)<br>entire text | 1-8 |
| A | JP 2017-186718 A (IST CORP) 12 October 2017 (2017-10-12)<br>entire text | 1-8 |
| A | CN 104231348 A (CHANGSHU WANBAO NEW MATERIAL SCIENCE & TECHNOLOGYCO., LTD.) 24 December 2014 (2014-12-24)<br>entire text | 1-8 |
| A | CN 111548488 A (BEIJING UNIVERSITY OF CHEMICAL TECHNOLOGY) 18 August 2020 (2020-08-18)<br>entire text | 1-8 |

☐ Further documents are listed in the continuation of Box C.     ☑ See patent family annex.

| | | |
| --- | --- | --- |
| \* | Special categories of cited documents: | |
| "A" | document defining the general state of the art which is not considered to be of particular relevance | "T" later document published after the international filing date or priority date and not in conflict with the application but cited to understand the principle or theory underlying the invention |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
| --- | --- |
| **17 August 2023** | **29 August 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2023/021354**

| Patent document cited in search report | | | Publication date (day/month/year) | Patent family member(s) | | Publication date (day/month/year) |
|---|---|---|---|---|---|---|
| CN | 109503960 | A | 22 March 2019 | (Family: none) | | |
| JP | 2004-324007 | A | 18 November 2004 | (Family: none) | | |
| JP | 2004-51853 | A | 19 February 2004 | (Family: none) | | |
| JP | 2017-186718 | A | 12 October 2017 | US 2017/0283990 A1 EP 3225723 A1 CN 107268109 A KR 10-2017-0113032 A | | |
| CN | 104231348 | A | 24 December 2014 | (Family: none) | | |
| CN | 111548488 | A | 18 August 2020 | (Family: none) | | |

**REFERENCES CITED IN THE DESCRIPTION**

**Patent documents cited in the description**

- JP 2009261473 A
- JP 2008237373 A

- JP 2003012889 A